# EUROPÄISCHE PATENTSCHRIFT

(11) **EP 3 594 409 B1**
(45) Veröffentlichungstag und Bekanntmachung des Hinweises auf die Patenterteilung: **09.03.2022**
(21) Anmeldenummer: 18183360.9
(22) Anmeldetag: 13.07.2018
(51) Int. Cl.: E01C 19/48

(54) **BAUMASCHINE MIT EINER FÖRDERBANDANLAGE MIT GEWICHTSSENSOR**
CONSTRUCTION MACHINE WITH A CONVEYOR BELT INSTALLATION WITH A WEIGHT SENSOR
ENGIN DE CONSTRUCTION DOTÉ D'UNE INSTALLATION DE BANDE TRANSPORTEUSE À CAPTEUR DE POIDS

(43) Veröffentlichungstag der Anmeldung: 15.01.2020
(73) Patentinhaber: Joseph Vögele AG, 67067 Ludwigshafen (DE)
(72) Erfinder: FICKEISEN, Steffen, 67098 Bad Dürkheim (DE); RUTZ, Arnold, 67065 Ludwigshafen (DE); MUNZ, Roman, 67435 Neustadt (DE); BUSCHMANN, Martin, 67435 Neustadt (DE)
(74) Vertreter: Grünecker Patent- und Rechtsanwälte PartG mbB

(56) Entgegenhaltungen:
- EP-A1- 2 514 873
- EP-A1- 2 711 460
- DE-A1- 19 951 646
- DE-A1-102005 040 326
- DE-A1-102012 209 495
- US-A1- 2016 215 458
- US-A1- 2017 205 999

## Beschreibung

Die vorliegende Erfindung betrifft eine Baumaschine, welche ein Straßenfertiger oder Beschickerfahrzeug sein kann.

Zur Herstellung von Straßen oder vergleichbaren Flächen werden Straßenfertiger verwendet, die einen Belag aus Asphalt oder einem ähnlichem Material aufbringen. In einem Gutbunker hält der Straßenfertiger das Einbaumaterial vor, welches mittels einer Förderbandanlage sukzessive vor der Einbaubohle abgelegt und von dieser vorverdichtet und geglättet wird, um eine ebene und homogene Fläche zu schaffen. In Fahrtrichtung vor dem Straßenfertiger kann ein Beschickerfahrzeug eingesetzt werden, um insbesondere die Materialbevorratung zu erhöhen. Das Beschickerfahrzeug ist eigenständig angetrieben und umfasst ebenfalls einen Gutbunker sowie eine Förderbandanlage. Das von einem LKW angelieferte Einbaumaterial wird bei der Verwendung eines Beschickerfahrzeugs zunächst in dessen Gutbunker gekippt und über die Förderbandanlage des Beschickerfahrzeugs in den Gutbunker des Straßenfertigers transportiert. Somit stehen zwei Gutbunker zur Materialbevorratung zur Verfügung. Dies erlaubt einen größeren zeitlichen Puffer für die Anlieferung des Einbaumaterials. Beide Baumaschinen können zusätzlich weitere Vorrichtungen, insbesondere angeordnet in ihren jeweiligen Gutbunkern, wie zum Beispiel eine Heizung, Förderschnecken oder Rüttler aufweisen, die den Einbauprozess verbessern, indem eine gute Durchmischung des Einbaumaterials gewährleistet und ein Erkalten, Erstarren oder Entmischen des Einbaumaterials vermieden wird.

Bei bisherigen Baumaschinen, insbesondere in Form von Straßenfertigern und Beschickerfahrzeugen, ist es beispielsweise aus der DE102012209495 A1 bekannt, dass die Materialfördermengen mittels eines Volumensensors ermittelt werden.

Aufgabe der Erfindung ist es, die Verarbeitung von Einbaumaterial durch eine Baumaschine, welche ein Straßenfertiger oder ein Beschickerfahrzeug ist, exakt und kontinuierlich zu quantifizieren, zu überwachen und zu prognostizieren.

Diese Aufgabe wird gelöst durch eine Baumaschine mit den Merkmalen des Anspruchs 1. Vorteilhafte Weiterbildungen der Erfindung sind in den Unteransprüchen angegeben.

Eine erfindungsgemäße Baumaschine, welche ein Straßenfertiger oder ein Beschickerfahrzeug ist, umfasst einen Bedienstand, einen Gutbunker, eine Förderbandanlage und ein elektronisches Steuerungssystem. Dabei umfasst die Förderbandanlage ein Förderband, sowie einen oder mehrere Gewichtssensoren, welche dazu konfiguriert sind, die Gewichtskraft des auf dem Förderband befindlichen Einbaumaterials zu messen. Die Förderbandanlage umfasst desweitern einen oder mehrere Neigungssensoren, welche dazu konfiguriert sind, einen Neigungswinkel und/oder einen Rollwinkel der Förderbandanlage zu messen. Das elektronische Steuerungssystem ist dazu konfiguriert, Daten der Gewichtssensoren und der Neigungssensoren zu empfangen und zu verarbeiten, um eine Masse des Einbaumaterials zu berechnen. Zusätzlich zu dem Gewichtssensor kann die Förderbandanlage einen Volumensensor umfassen, welcher dazu konfiguriert ist, ein Volumen des auf dem Förderband befindlichen Einbaumaterials zu messen.

Sowohl bei Straßenfertiger als auch Beschickerfahrzeug ist der Gutbunker üblicherweise in Fahrtrichtung vorne angeordnet, so dass dieser von einem vorausfahrenden Fahrzeug befüllt werden kann. Durch einen Chassistunnel verläuft die Förderbandanlage vom Gutbunker zum hinteren Ende der Baumaschine, um dort beispielsweise das Einbaumaterial vor einer Einbaubohle abzulegen. Das Förderband liegt auf Lagerungen, beispielsweise Rollen, auf und kann mit variabler Fördergeschwindigkeit betrieben werden. Die Gewichtssensoren können an einzelnen Lagerungen angeordnet sein und damit die Gewichtskraft des Einbaumaterials auf einzelne Bereiche oder Zellen messen. Ebenso ist es möglich, die Lagerungen des Förderbands so mit Gewichtssensoren zu versehen, dass die Gewichtskraft des gesamten auf dem Förderband befindlichen Einbaumaterials gemessen wird. Die Messergebnisse werden hierbei um das Eigengewicht des Förderbands korrigiert. Befindet sich die Baumaschine auf einer geneigten Fläche, um diese zu asphaltieren, so ist auch die Baumaschine und damit das Förderband entsprechend geneigt, und die von dem Einbaumaterial auf den Gewichtssensor ausgeübte Normalkraft weicht von der tatsächlichen Gewichtskraft ab. Gleiches gilt für den Fall, dass das Förderband selbst in seiner Neigung verändert werden kann, wie dies insbesondere bei Beschickerfahrzeugen möglich ist, um das Einbaumaterial über die Seitenwände eines Gutbunkers eines zu beladenden Straßenfertigers anzuheben und über dem Gutbunker abzuwerfen. Mithilfe der einen oder mehreren Neigungssensoren können ein Neigungswinkel und ein Rollwinkel der Förderbandanlage ermittelt werden und mittels bekannter trigonometrischer Funktionen die Gewichtskraft korrigiert werden, um die tatsächliche Masse des Einbaumaterials auf dem Förderband zu bestimmen. Das elektronische Steuerungssystem verarbeitet vorzugsweise alle von den Sensoren erhaltenen Daten automatisch in Echtzeit und kann diese dem Bediener der Baumaschine auf einem Display anzeigen. So ist eine kontinuierliche Überwachung der Masse bzw. der Menge des verarbeiteten Einbaumaterials möglich und es muss nicht mehr nur anhand des Lieferscheins eines anliefernden LKWs und einer Sichtprüfung des Materials im Gutbunker die bereits verarbeitete Menge bzw. die noch verbleibende abgeschätzt werden.

Der Volumensensor kann beispielsweise ein Laserscanner sein, welcher oberhalb des Förderbands angebracht ist und die Oberfläche des Einbaumaterials auf dem Förderband optisch abtastet. Dabei kann beispielsweise das Oberflächenprofil entlang einer zur Förderrichtung senkrechten und horizontal verlaufenden gedachten Schnittlinie zweidimensional gescannt, es kann jedoch auch ein breiterer Bereich auf dem Förderband dreidimensional erfasst werden. So können auch volumenbasierte Daten berechnet werden.

Zweckmäßig umfasst die Förderbandanlage einen oder mehrere Geschwindigkeitssensoren, welche dazu konfiguriert sind, eine Fördergeschwindigkeit des Förderbands zu messen. Die Geschwindigkeitssensoren können beispielsweise die Drehbewegung eines Rollenantriebs des Förderbands messen. Mit den erfassten Geschwindigkeitswerten des Förderbands kann so die tatsächlich verarbeitete Menge Einbaumaterials berechnet werden, da die Zeit, für die das Einbaumaterial auf dem Förderband verbleibt, damit bekannt ist. Auch kann so der Förderbandantrieb gesteuert werden.

In einer typischen Variante ist das elektronische Steuerungssystem dazu konfiguriert, Daten der Geschwindigkeitssensoren zu empfangen und zu verarbeiten, um eine Förderrate des Einbaumaterials zu berechnen. Da die zuvor erwähnten Messwerte für Masse und Volumen nur einen einzigen Zeitpunkt darstellen, ist die Kombination der einzelnen Messwerte mit der Fördergeschwindigkeit in der Lage, den zeitlichen Verlauf und damit auch die Summe des bis zu einem gewissen Zeitpunkt geförderten Materials zu berechnen. Durch Berücksichtigung der Fördergeschwindigkeit können die Messwerte summiert bzw. integriert werden, und eine Mehrfachzählung wird vermieden.

Idealerweise ist das elektronische Steuerungssystem dazu konfiguriert, aufgrund der von den Sensoren erhaltenen Daten eine Puffermenge des Einbaumaterials der Baumaschine zu bestimmen und damit die zeitliche Verfügbarkeit des Einbaumaterials vorauszuberechnen. Hierbei kann beispielsweise von gleichbleibenden Einbauanforderungen ausgegangen und zweckdienlich die ermittelte bisherige Förderrate interpoliert werden. Aus dem Lieferschein für das angelieferte Einbaumaterial ist dessen ursprüngliche Menge bekannt und damit kann die verbleibende Menge im Gutbunker und die verbleibende Zeit, bis eine Neubefüllung nötig ist, berechnet werden. Somit kann die Anlieferung von Einbaumaterial effizient organisiert werden, so dass weder zu wenig Material vorhanden ist und der Einbauprozess deswegen unterbrochen werden muss, noch zu viel Einbaumaterial angeliefert wird und die Transport-LKWs Wartezeiten bis zum Abladen in Kauf nehmen müssen, während der das Einbaumaterial abkühlen kann. Auch kann die Einbaugeschwindigkeit in Grenzen angepasst werden, falls die Zulieferkette dies nötig macht.

In einer gängigen Variante weist das elektronische Steuerungssystem eine Schnittstelle für eine drahtlose Datenkommunikation zum Austausch von Daten mit elektronischen Steuerungssystemen anderer Baumaschinen und/oder mit weiteren Datenverarbeitungsanlagen auf. So kann mittels üblicher Funkstandards und Vorrichtungen ein integratives Steuerungskonzept für eine Baustelle realisiert werden, bei dem alle beteiligten Fahrzeuge über einen umfassenden Datenaustausch miteinander verbunden sind und eine entsprechende Ablaufplanung und Koordination stattfinden kann.

Vorzugsweise weist eine Baumaschine, insbesondere ein Straßenfertiger, eine Einbaubohle mit einer Bohlenbreitenerfassung auf, um eine Breite eines verlegten Straßenbelags zu bestimmen. Dabei kann es sich bei der Bohlenbreitenerfassung um auslesbare Datenfelder, wie z.B. ID-Tags, einer Einbaubohle fester Breite und/oder von Anbauteilen handeln, oder um eine Messvorrichtung, wie z.B. einem Potentiometer, bei Ausziehbohlen handeln. Die Daten werden jeweils von dem elektronischen Steuerungssystem gespeichert und verarbeitet.

Typischerweise weist die Baumaschine einen Streckensensor auf, um eine in einem Einbaubetrieb zurückgelegte Wegstrecke und damit eine Länge eines verlegten Straßenbelags zu bestimmen. Der Streckensensor kann eine mechanische Vorrichtung, wie beispielsweise ein an einer Halterung befestigtes Messrad sein, welches durch Bodenkontakt bei einer Bewegung der Baumaschine gedreht wird und diese Drehung wiederum elektronisch, beispielsweise durch Auslesung von Hall-Sensoren, welche die Rotation eines Magneten detektieren, erfasst wird. Genauso kann die Erfassung der Bewegung jedoch auch über andere mechanische oder elektronische Verfahren, wie zum Beispiel einer Satelliten-gestützten Positionsbestimmung, z.B. GPS, erfolgen. Somit kann die exakte Länge des neu gefertigten Straßenbelags erfasst und mittels des elektronischen Steuerungssystems verarbeitet werden.

In einer weiteren vorteilhaften Variante weist ein Straßenfertiger eine Einbaubohle mit einer Schichtstärkenerfassung auf, um eine Schichtstärke eines verlegten Straßenbelags zu bestimmen. Die Schichtstärke kann beispielsweise durch eine Vergleichsmessung der Höhe des neu verbauten Straßenbelags und der Höhe des sich davor befindlichen Straßenfundaments ermittelt werden. Dazu können ausfahrbare Tastsensoren, oder Laservorrichtungen oder andere geeignete Methoden verwendet werden, wobei die Sensoren an der Einbaubohle aber auch an anderen zweckmäßigen Positionen der Baumaschine angeordnet sein können. So kann nicht nur die relative Höhe des Straßenbelags im Vergleich zu anderen Referenzpunkten wie einer Gehwegkante, sondern die absolute Schichtstärke bestimmt werden.

Erfindungsgemäß ist das elektronische Steuerungssystem dazu konfiguriert, anhand der ermittelten Masse des verarbeiteten Einbaumaterials sowie der Breite und der Länge des verlegten Straßenbelags eine Masse pro Fläche zu berechnen. Üblicherweise wird bereits mit Auftragsvergabe eine minimale Masse pro Fläche des Einbaumaterials vorgegeben, um eine bestimmte Haltbarkeit und Widerstandsfähigkeit des Straßenbelags zu erhalten. Der Wert darf dabei nicht unterschritten werden, da sonst der neue Straßenbelag wieder entfernt und nochmals ein neuer eingebaut werden müsste. Der Wert sollte jedoch auch nicht zu hoch sein, da sonst Mehrkosten für den Baustellenausführenden entstehen. Mittels der oben beschriebenen Sensoren kann nun bereits während des Einbaubetriebs kontrolliert werden, ob alle Anforderungen erfüllt werden und gegebenenfalls sofort die Maschineneinstellungen korrigiert werden. Außerdem kann, wie bereits erwähnt, der Materialdurchsatz überwacht und ein effizientes Baustellenmanagement betrieben werden.

In einer üblichen Variante ist das elektronische Steuerungssystem dazu konfiguriert, anhand der ermittelten Masse des verarbeiteten Einbaumaterials sowie der Breite, der Länge und der Schichtstärke des verlegten Straßenbelags eine Masse pro Volumen und somit einen Verdichtungsgrad des Einbaumaterials zu berechnen. Der Verdichtungsgrad gibt darüber Aufschluss, in welchem Maß eine weitere Verdichtung durch Walzen nötig ist.

Erfindungsgemäß ist das elektronische Steuerungssystem Z auch dazu konfiguriert, anhand der ermittelten Masse pro Fläche des verlegten Straßenbelags sowie bekannter Maße einer noch zu asphaltierenden Fläche einen weiteren Bedarf an Einbaumaterial zu berechnen. Dazu kann beispielsweise die gesamte zu asphaltierende Fläche vor dem Einbaubeginn in das elektronische Steuerungssystem eingegeben werden, so dass dieses dann entsprechend den aktuellen ermittelten Positionsdaten und des bisherigen Materialverbrauchs den weiteren Bedarf an Einbaumaterial berechnen kann. So kann die weitere Zulieferung durch LKWs geplant und eine entsprechende Produktionskapazität vorgehalten aber auch eine überschüssige Menge von angeliefertem Einbaumaterial vermieden werden.

In einer gängigen Variante ist die Förderbandanlage der Baumaschine, welche insbesondere ein Beschickerfahrzeug sein kann, eine Schwenkbandanlage, welche dazu geeignet ist, verschiedene Schwenkpositionen einzunehmen, um Einbaumaterial an unterschiedliche, in der Fertigungskette nachfolgende Baumaschinen, insbesondere Straßenfertiger, zu übergeben. So können beispielsweise zwei nebeneinander asphaltierende Straßenfertiger von einem Beschickerfahrzeug beladen werden. So kann der Bedarf an Baumaschinen und damit die Kosten für eine Baustelle reduziert werden.

Bevorzugt umfasst die Schwenkbandanlage einen Winkelgeber, um die Schwenkposition der Schwenkbandanlage zu erfassen und verschiedene Winkelbereiche unterschiedlichen nachfolgenden Baumaschinen, insbesondere Straßenfertigern, zuzuordnen. Zu Beginn des Arbeitsprozesses kann die jeweilige Position der Schwenkbandanlage einem Straßenfertiger zugeordnet werden, also das System eingelernt werden. Dann kann beispielsweise ein Beschickerfahrzeug zwei Straßenfertiger beladen und ein elektronisches Steuerungssystem registriert automatisch, welcher Straßenfertiger wieviel und welches Einbaumaterial erhalten hat. Somit ist eine automatische Überwachung und Steuerung des Einbauprozesses mit Ermittlung von Daten, wie oben beschrieben, möglich, was einen effizienteren Einbauprozess bedeutet.

In einer weiteren Variante weist die Baumaschine eine drahtlose Nahfeldkommunikationseinheit auf, um die, der das Einbaumaterial zu übergebenden, nachfolgende Baumaschine, insbesondere Straßenfertiger, durch Auslesen einer eindeutigen Kennung zu identifizieren. So kann beispielsweise an der Schwenkbandanlage ein Lesegerät angeordnet sein, welches einen an dem zu beladenden Straßenfertiger angebrachten RFID-Chip ausliest, wenn die Schwenkbandanlage zu diesem Straßenfertiger hin geschwenkt ist. Damit kann auch der Einlernvorgang zum Identifizieren der jeweiligen Straßenfertiger an einer bestimmten Schwenkposition in Verbindung mit dem elektronischen Steuerungssystem vollautomatisch geschehen.

In einer weiteren zweckmäßigen Variante ist das elektronische Steuerungssystem und/oder die Schnittstelle zur drahtlosen Datenkommunikation dazu konfiguriert, eine nachfolgende Baumaschine, insbesondere einen Straßenfertiger, an die das Einbaumaterial übergeben wird, im Datenstrom zu identifizieren. So können, zum Beispiel wenn ein Beschickerfahrzeug mehrere Straßenfertiger belädt, Daten und Signale jeweils zwischen dem Beschickerfahrzeug und dem gerade relevanten Straßenfertiger ausgetauscht werden.

Im Folgenden werden Ausführungsbeispiele der Erfindung anhand der Figuren näher beschrieben. Dabei zeigt
- Figur 1:: zwei Baumaschinen in Form eines Beschickerfahrzeugs und eines Straßenfertigers in schematischer seitlicher Ansicht,
- Figur 2:: zwei Straßenfertiger und ein Beschickerfahrzeug mit einer Schwenkbandanlage in einer ersten und zweiten Position in schematischer Draufsicht.

Einander entsprechende Komponenten sind in den Figuren jeweils mit gleichen Bezugszeichen versehen.

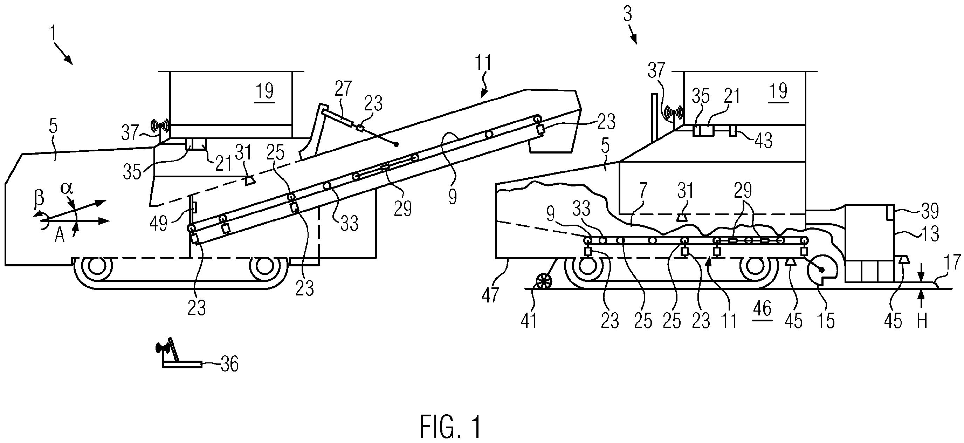

Figur 1 zeigt erfindungsgemäße Ausführungsbeispiele einer Baumaschine 1, 3 in Form eines Beschickerfahrzeugs 1 und eines Straßenfertigers 3. Das Beschickerfahrzeug 1 weist einen Gutbunker 5 auf, in welchen Einbaumaterial 7 von einem LKW abgekippt werden kann und in dem es bevorratet und gegebenenfalls beheizt und durchmischt wird. Über ein Förderband 9 einer Förderbandanlage 11 wird das Einbaumaterial 7 in den Gutbunker 5 des Straßenfertigers 3 geladen. Von dort wird es mittels der Förderbandanlage 11 des Straßenfertigers 3 vor einer Einbaubohle 13 platziert und durch eine Förderschnecke 15 gleichmäßig verteilt. Die Einbaubohle 13 glättet und verdichtet das Einbaumaterial 7, so dass ein ebener und stabiler Straßenbelag 17 entsteht. Beide Baumaschinen 1, 3 weisen einen Bedienstand 19 auf, von wo aus ein Fahrer die Baumaschine 1, 3 jeweils bedienen kann. Ein elektronisches Steuerungssystem 21 umfasst Datenverarbeitungs- und Datenspeicherkomponenten und steuert den Betrieb der jeweiligen Baumaschine 1, 3 gemäß der implementierten Funktionen inklusive dem Datenaustausch mit Sensoren sowie Ein- und Ausgabegeräten.

Die Förderbandanlage 11 umfasst jeweils einen oder mehrere Gewichtssensoren 23, welche die Gewichtskraft des sich auf dem Förderband 9 befindlichen Einbaumaterials 7 messen. Die Gewichtssensoren 23 können dabei entweder so angeordnet sein, dass sie nur einen Abschnitt des Förderbands 9 messen, oder aber auch die Gewichtskraft des gesamten sich auf dem Förderband 9 befindlichen Einbaumaterials 7 detektieren. Dementsprechend können die Gewichtssensoren 23 in der Lagerung einzelner Auflagerollen 25 oder der Lagerung des gesamten Förderbands 9 angeordnet sein. Im Fall des Beschickerfahrzeugs 1 ist auch eine Gewichtsmessung durch einen in einer Aufhängung 27 der schwenkbaren Förderbandanlage 11 angeordneten Gewichtssensor 23 möglich.

Zur Bestimmung der Lage der Förderbandanlage 11 im Raum sind einer oder mehrere Neigungssensoren 29 verbaut, welche einen Neigungswinkel α und einen Rollwinkel β bestimmen. Der Neigungswinkel α gibt dabei die Neigung der Förderbandanlage 11 zur Horizontalen an, wobei die Neigung durch eine Verstellung der Förderbandanlage 11 und durch das Befahren einer ansteigenden oder abschüssigen Straße und damit einer zusätzlichen Neigung einer horizontalen Fahrzeugachse A auftritt. Der Rollwinkel β entspricht einer Drehung der Baumaschine 1, 3 um die horizontale Fahrzeuglängsachse A aufgrund eines seitlich abschüssigen Flächenprofils des Straßenfundaments, welches beispielsweise zum Zweck einer Kurvenüberhöhung aufrechterhalten werden soll. Mit den von dem Neigungssensor 29 erhaltenen Winkeldaten kann dann die von dem Gewichtssensor 23 detektierte, auf das Förderband 9 einwirkende Normalkraft in die tatsächliche Gewichtskraft des Einbaumaterials 7 umgerechnet und damit dessen Masse bestimmt werden.

Innerhalb der Förderbandanlage 11 kann ein Volumensensor 31 angeordnet sein, welcher, wie oben beschrieben, beispielsweise durch Lasermessung das Volumen des sich auf dem Förderband 9 befindlichen Einbaumaterials 7 erfasst. Des Weiteren ist in der Förderbandanlage 11 ein Geschwindigkeitssensor 33 angeordnet, welcher die Fördergeschwindigkeit des Förderbands 9 misst. Ein solcher Geschwindigkeitssensor 33 kann als extra Bauteil, beispielsweise als eine vom Förderband 9 angetriebene Rolle, mit diesem verbunden sein oder auch, falls das Förderband 9 von einem Elektromotor angetrieben wird, direkt in diesem verbaut sein.

Das elektronische Steuerungssystem 21 verfügt neben den Datenleitungen, Speichereinheiten und Schaltkreisen zum Datenaustausch mit den elektronischen Komponenten der Baumaschine, zur Datenspeicherung und -verarbeitung zusätzlich über eine Schnittstelle 35 für eine drahtlose Datenkommunikation mit anderen Baumaschinen 1 und/oder weiteren Datenverarbeitungsanlagen 36, wie zum Beispiel einem tragbaren Personalcomputer oder einer Steuerzentrale der ausführenden Baufirma. Bei der Schnittstelle 35 kann es sich dementsprechend z.B. um eine Mobilfunk-, WLAN- oder Bluetooth-Schnittstelle 35 oder eine Schnittstelle für einen anderen geeigneten Übertragungsstandard handeln, wobei auch mehrere davon implementiert sein können. Die Schnittstelle 35 zur Datenkommunikation kann zweckmäßig mit einer geeigneten Antenne 37 verbunden sein.

Die Baumaschine 3 in Form eines Straßenfertigers 3 umfasst die Einbaubohle 13, welche über anbaubare Verbreiterungselemente oder über einen Ausziehmechanismus in ihrer Breite an die jeweiligen Anforderungen angepasst werden kann. Zur Erfassung ihrer Arbeitsbreite ist an der Einbaubohle eine Bohlenbreitenerfassung 39 angeordnet. Diese kann beispielsweise Identifikations-Tags, welche entsprechende Information enthalten, von Festbreitenbohlen und Anbauteilen auslesen oder die Ausziehbreite von Ausziehbohlen, beispielsweise mittels eines Potentiometers, messen. Die ermittelten Daten werden dann an das elektronische Steuerungssystem 21 weitergeleitet.

Um die im Einbaubetrieb zurückgelegte Wegstrecke zu bestimmen, kann die Baumaschine 3 einen Streckensensor in Form eines Messrads 41 aufweisen. Zusätzlich oder alternativ kann auch ein GPS-Empfänger 43 verwendet werden. Beide Streckensensoren 41, 43 werden von dem elektronischen Steuerungssystem 21 ausgelesen und können optional mit einer Überwachung der Einbaubohle 13 gekoppelt sein, so dass automatisch nur die zurückgelegte Wegstrecke erfasst wird, bei welcher sich die Einbaubohle 13 in einer abgesenkten Fertigungsposition oder Schwimmstellung und damit im Einbaubetrieb befindet.

Zur Bestimmung einer Schichtstärke H des verlegten Straßenbelags 17 ist eine Schichtstärkenerfassung 45 an dem Straßenfertiger 3 angeordnet, welche hier in Form zweier Laser-Abstandsmessgeräte 45 gezeigt ist. Es werden damit die Oberflächen eines Straßenfundaments 46 vor dem Einbau des Straßenbelags 17 sowie des verlegten Straßenbelags 17 erfasst und deren Höhenunterschied bestimmt. Dabei können die Abstandsmessgeräte 45 mit einem entsprechenden Gestänge beide an dem Chassis des Straßenfertigers 3 oder beide an der Einbaubohle 13 montiert sein. Alternativ kann auch auf diese zusätzlichen Messgeräte 45 verzichtet werden und die Stellung der Einbaubohle 13 im Vergleich zu einem Chassis 47 über ihre Aufhängung erfasst werden. Auch eine Höhenverstellung des Chassis 47 kann dabei berücksichtigt werden.

Bei der Förderbandanlage 11 des Beschickerfahrzeugs 1 kann es sich um eine Schwenkbandanlage handeln, so dass durch ein horizontales Schwenken der Förderbandanlage 11 mehrere Straßenfertiger 3 in unterschiedlichen Positionen in Bezug zum Beschickerfahrzeug 1 beladen werden können. Um die aktuelle Position der Schwenkbandanlage 11 zu erfassen, kann diese mit einem Winkelgeber 49 ausgestattet sein, um einen Dreh- bzw. Schwenkwinkel zu erfassen.

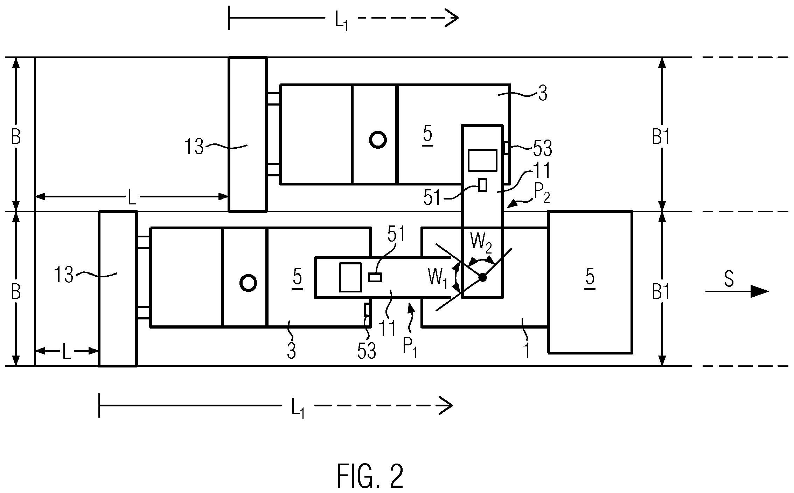

Figur 2 zeigt einen Einbauzug mit zwei versetzt nebeneinander fahrenden Straßenfertigern 3 und einem Beschickerfahrzeug 1, welches eine Förderbandanlage 11 in Form einer Schwenkbandanlage aufweist, welche in einer ersten Position P1 zum Beladen eines in Fahrtrichtung S gesehen hinter dem Beschickerfahrzeug 1 fahrenden Straßenfertigers 3 und einer zweiten Position P2 zum Beladen eines seitlich versetzten Straßenfertigers 3 dargestellt ist. Um die mit dem Winkelgeber 49 erfasste Position der Förderbandanlage 11 mit jeweils einem Straßenfertiger 3 zu verknüpfen, kann an dem Beschickerfahrzeug 1, beispielsweise an der Förderbandanlage 11, insbesondere an deren Unterseite, eine Einheit 51 zur drahtlosen Nahfeldkommunikation angeordnet sein, welche eine Kennung 53 des jeweiligen Straßenfertigers 3 ausliest, um diesen eindeutig zu identifizieren. Die Kennung kann beispielsweise ein am Gutbunker 5 des Straßenfertigers 3 angebrachtes RFID-Etikett sein. Da die Förderbandanlage 11 nicht nur zwischen zwei Positionen P1, P2 verstellt, sondern kontinuierlich geschwenkt werden kann, kann nicht nur eine exakte Position P1, P2 der Förderbandanlage einem Straßenfertiger 3 zugeordnet werden, sondern es können Winkelbereiche W1, W2, beispielsweise in einer Größe von jeweils 80°, definiert und zugeordnet werden.

Der bereits verlegte Straßenbelag 17 weist eine Breite B und eine Länge L auf, welche, wie zuvor beschrieben, bestimmt werden können. Die Maße einer noch zu asphaltierenden Fläche können durch eine Länge L1 und eine Breite B1 bestimmt werden. Es können jedoch auch kompliziertere Formen gefertigt werden. Zur Bestimmung des Gesamtbedarfs an Einbaumaterial 7 kann die Gesamtfläche im Planungsprozess entsprechend vermessen werden.

Ausgehend von den oben dargestellten Ausführungsformen einer Baumaschine 1, 3 sind vielerlei Variationen derselben denkbar. So kann ein Beschickerfahrzeug 1 mit einer ersten und einer zweiten Förderbandanlage 11 ausgestattet sein. Dabei dient die erste Förderbandanlage 11 zum Transport des Einbaumaterials 7 vom Gutbunker 5 zum hinteren Ende des Beschickerfahrzeugs 1, wo es an die zweite Förderbandanlage 11 übergeben wird, und mit dieser ein Straßenfertiger 3 beladen wird. Dabei handelt es sich bei der zweiten Förderbandanlage 11 üblicherweise um eine Schwenkbandanlage. Der Gewichtssensor 23 sowie die weiteren Sensoren 23, 31, 33 können dabei in jeder der Förderbandanlagen 11 verbaut werden, wobei der Einfachheit halber sich die interne Förderbandanlage 11 anbietet.

## Patentansprüche

1. Baumaschine (1, 3), wobei die Baumaschine (1, 3) ein Beschickerfahrzeug (1) oder ein Straßenfertiger (3) ist, und wobei die Baumaschine (1, 3) einen Bedienstand (19), einen Gutbunker (5), eine Förderbandanlage (11) und ein elektronisches Steuerungssystem (21) umfasst,
wobei die Förderbandanlage (11) ein Förderband (9), sowie einen oder mehrere Gewichtssensoren (23) umfasst, welche dazu konfiguriert sind, die Gewichtskraft des auf dem Förderband (9) befindlichen Einbaumaterials (7) zu messen, sowie einen oder mehrere Neigungssensoren (29) umfasst, welche dazu konfiguriert sind, einen Neigungswinkel (α) und/oder einen Rollwinkel (β) der Förderbandanlage (11) zu messen,
**dadurch gekennzeichnet, dass**
das elektronische Steuerungssystem (21) dazu konfiguriert ist, Daten der Gewichtssensoren (23) und der Neigungssensoren (29) zu empfangen und zu verarbeiten, um eine Masse des Einbaumaterials (7) zu berechnen,
wobei das elektronische Steuerungssystem (21) dazu konfiguriert ist, anhand der ermittelten Masse des verarbeiteten Einbaumaterials (7) sowie der Breite (B) und der Länge (L) des verlegten Straßenbelags (17) eine Masse pro Fläche zu berechnen,
und das elektronische Steuerungssystem (21) dazu konfiguriert ist, anhand der ermittelten Masse pro Fläche des verlegten Straßenbelags (17) sowie bekannter Maße (B1, L1) einer noch zu asphaltierenden Fläche einen Bedarf an Einbaumaterial (7) zu berechnen.

2. Baumaschine nach Anspruch 1, **dadurch gekennzeichnet, dass** die Förderbandanlage (11) einen oder mehrere Geschwindigkeitssensoren (33) umfasst, welche dazu konfiguriert sind, eine Fördergeschwindigkeit des Förderbandes (9) zu messen.

3. Baumaschine nach Anspruch 2, **dadurch gekennzeichnet, dass** das elektronische Steuerungssystem (21) dazu konfiguriert ist, Daten der Geschwindigkeitssensoren (33) zu empfangen und zu verarbeiten, um eine Förderrate des Einbaumaterials (7) zu berechnen.

4. Baumaschine nach Anspruch 2 oder 3, **dadurch gekennzeichnet, dass** das elektronische Steuerungssystem (21) dazu konfiguriert ist, aufgrund der von den Sensoren (23, 29, 33) erhaltenen Daten und anhand einer ursprünglich angelieferten Menge an Einbaumaterial (7) eine Puffermenge des Einbaumaterials (7) der Baumaschine (1, 3) zu bestimmen und damit die zeitliche Verfügbarkeit des Einbaumaterials (7) vorauszuberechnen.

5. Baumaschine nach einem der vorangegangenen Ansprüche, **dadurch gekennzeichnet, dass** das elektronische Steuerungssystem (21) eine Schnittstelle (35) für eine drahtlose Datenkommunikation zum Austausch von Daten mit elektronischen Steuerungssystemen (21) anderer Baumaschinen (1, 3) und/oder mit weiteren Datenverarbeitungsanlagen (36) aufweist.

6. Baumaschine nach einem der vorangegangenen Ansprüche, insbesondere ein Straßenfertiger (3), **dadurch gekennzeichnet,** eine Einbaubohle (13) mit einer Bohlenbreitenerfassung (39) aufzuweisen, um eine Breite (B) eines verlegten Straßenbelags (17) zu bestimmen.

7. Baumaschine nach einem der vorangegangenen Ansprüche, insbesondere ein Straßenfertiger (3), **dadurch gekennzeichnet,** einen Streckensensor (41, 43) aufzuweisen, um eine in einem Einbaubetrieb zurückgelegte Wegstrecke und damit eine Länge (L) eines verlegten Straßenbelags (7) zu bestimmen.

8. Baumaschine nach einem der vorangegangenen Ansprüche, insbesondere ein Straßenfertiger (3), **dadurch gekennzeichnet,** eine Einbaubohle (13) mit einer Schichtstärkenerfassung (45) aufzuweisen, um eine Schichtstärke (H) eines verlegten Straßenbelags (17) zu bestimmen.

9. Baumaschine nach einem der vorangegangenen Ansprüche, **dadurch gekennzeichnet, dass** das elektronische Steuerungssystem (21) dazu konfiguriert ist, anhand der ermittelten Masse des verarbeiteten Einbaumaterials (7) sowie der Breite (B), der Länge (L) und der Schichtstärke (H) des verlegten Straßenbelags (17) eine Masse pro Volumen und somit einen Verdichtungsgrad des Einbaumaterials (7) zu berechnen.

10. Baumaschine nach einem der Ansprüche 1 bis 5, ausgebildet als Beschickerfahrzeug (1),
**dadurch gekennzeichnet, dass** die Förderbandanlage (11) eine Schwenkbandanlage (11) ist, welche dazu geeignet ist, verschiedene Schwenkpositionen (P1, P2) einzunehmen, um Einbaumaterial (7) an unterschiedliche, in der Fertigungskette nachfolgende Baumaschinen (1, 3), insbesondere Straßenfertiger (3), zu übergeben.

11. Baumaschine nach Anspruch 10, **dadurch gekennzeichnet, dass** die Schwenkbandanlage (11) einen Winkelgeber (49) umfasst, um die Schwenkposition (P1, P2) der Schwenkbandanlage (11) zu erfassen und verschiedene Winkelbereiche (W1, W2) unterschiedlichen nachfolgenden Baumaschinen (1, 3), insbesondere Straßenfertigern (3), zuzuordnen.

12. Baumaschine nach Anspruch 10 oder 11, **dadurch gekennzeichnet,** eine drahtlose Nahfeldkommunikationseinheit (51) aufzuweisen, um die das Einbaumaterial (7) zu übergebenden nachfolgende Baumaschine (1, 3), insbesondere Straßenfertiger (3), durch Auslesen einer eindeutigen Kennung (53) zu identifizieren.

13. Baumaschine nach einem der Ansprüche 10 bis 12,
**dadurch gekennzeichnet, dass** das elektronische Steuerungssystem (21) und/oder die Schnittstelle (35) dazu konfiguriert ist, eine nachfolgende Baumaschine (1, 3), insbesondere Straßenfertiger (3), an die das Einbaumaterial (7) übergeben wird, in einem Datenstrom zu identifizieren.

## Claims

1. Construction machine (1, 3), the construction machine (1, 3) being a feeder vehicle (1) or a road finisher (3), and the construction machine (1, 3) comprising an operating platform (19), a material hopper (5), a conveyor belt system (11) and an electronic control system (21), wherein the conveyor belt system (11) comprises a conveyor belt (9) and one or more weight sensors (23) which are configured to measure the weight force of the paving material (7) located on the conveyor belt (9), and one or more inclination sensors (29) which are configured to measure an inclination angle (α) and/or a roll angle (β) of the conveyor belt system (11), **characterized in that** the electronic control system (21) is configured to receive and process data from the weight sensors (23) and the inclination sensors (29) to calculate a mass of the paving material (7),
wherein the electronic control system (21) is configured to calculate a mass per area on the basis of the determined mass of the processed paving material (7) and the width (B) and length (L) of the laid road surface (17),
and the electronic control system (21) is configured to calculate a demand for paving material (7) on the basis of the determined mass per area of the laid road surface (17) and known dimensions (B1, L1) of an area still to be asphalted.

2. Construction machine according to claim 1, **characterized in that** the conveyor belt system (11) comprises one or more speed sensors (33) configured to measure a conveying speed of the conveyor belt (9).

3. Construction machine according to claim 2, **characterized in that** the electronic control system (21) is configured to receive and process data of the speed sensors (33) to calculate a conveying rate of the paving material (7).

4. Construction machine according to claim 2 or 3, **characterized in that** the electronic control system (21) is configured to determine, on the basis of the data received from the sensors (23, 29, 33) and the known original quantity of delivered paving material, a buffer quantity of the paving material (7) of the construction machine (1, 3) and thus to precalculate the availability of the paving material (7) in terms of time.

5. Construction machine according to one of the preceding claims, **characterized in that** the electronic control system (21) has an interface (35) for wireless data communication for exchanging data with electronic control systems (21) of other construction machines (1, 3) and/or with further data processing systems (36).

6. Construction machine according to one of the preceding claims, in particular a road finisher (3), **characterized in that** it comprises a paving screed (13) with a screed width detector (39) for determining a width (B) of a laid road surface (17).

7. Construction machine according to one of the preceding claims, in particular a road finisher (3), **characterized in that** it comprises a distance sensor (41, 43) in order to determine a distance travelled in a paving operation and thus a length (L) of a laid road surface (7).

8. Construction machine according to one of the preceding claims, in particular a road finisher (3), **characterized in that** it comprises a paving screed (13) with a layer thickness detector (45) for determining a layer thickness (H) of a laid road surface (17).

9. Construction machine according to one of the preceding claims, **characterized in that** the electronic control system (21) is configured to calculate, on the basis of the determined mass of the processed paving material (7) and the width (B), length (L) and layer thickness (H) of the laid road surface (17), a mass per volume and thus a degree of compaction of the paving material (7).

10. Construction machine according to one of claims 1 to 5, being a feeder vehicle (1), **characterized in that** the conveyor belt system (11) is a pivoting belt system (11) which is suitable for taking up different pivoting positions (P1, P2) in order to transfer paving material (7) to different construction machines (1, 3), in particular road finishers (3), which are subsequent in the production chain.

11. Construction machine according to claim 10, **characterized in that** the pivoting belt system (11) comprises an angle sensor (49) in order to detect the pivoting position (P1, P2) of the pivoting belt system (11) and to assign different angle ranges (W1, W2) to different subsequent construction machines (1, 3), in particular road finishers (3).

12. Construction machine according to claim 10 or 11, **characterized in that** it comprises a wireless near-field communication unit (51) in order to identify the subsequent construction machine (1, 3), in particular a road finisher (3), to which the paving material (7) is to be handed over, by reading out an unambiguous identification (53).

13. Construction machine according to one of the claims 10 to 12, **characterized in that** the electronic control system (21) and/or the interface (35) is configured to identify a subsequent construction machine (1, 3), in particular a road finisher (3), to which the paving material (7) is handed over, in a data stream.

## Revendications

1. Engin de chantier (1, 3), dans lequel l'engin de chantier (1, 3) est un véhicule d'approvisionnement (1) ou un finisseur routier (3), et dans lequel l'engin de chantier (1, 3) comprend un poste de commande (19), une trémie (5), un système de bande transporteuse (11) et un système de commande électronique (21), dans lequel
le système de bande transporteuse (11) comprend une bande transporteuse (9), ainsi qu'un ou plusieurs capteur(s) de poids (23) qui est/sont configuré(s) pour mesurer la force pondérale du matériau d'ouvrage (7) se trouvant sur la bande transporteuse (9), et un ou plusieurs capteur(s) d'inclinaison (29) qui est/sont configuré(s) pour mesurer un angle d'inclinaison (α) et/ou un angle de roulis (β) du système de bande transporteuse (11), **caractérisé en ce que**
le système de commande électronique (21) est configuré pour recevoir et traiter des données des capteurs de poids (23) et des capteurs d'inclinaison (29) afin de calculer une masse du matériau d'ouvrage (7),
dans lequel le système de commande électronique (21) est configuré pour calculer une masse surfacique en se basant sur la masse déterminée du matériau d'ouvrage (7) traité et sur la largeur (B) et la longueur (L) du revêtement routier (17) mis en place,
et le système de commande électronique (21) est configuré pour calculer un besoin de matériau d'ouvrage (7) en se basant sur la masse surfacique déterminée du revêtement routier (17) mis en place et sur des mesures (B1, L1) connues d'une surface devant encore être asphaltée.

2. Engin de chantier selon la revendication 1, **caractérisé en ce que** le système de bande transporteuse (11) comprend un ou plusieurs capteur(s) de vitesse (33) qui est/sont configuré(s) pour mesurer une vitesse de transport de la bande transporteuse (9).

3. Engin de chantier selon la revendication 2, **caractérisé en ce que** le système de commande électronique (21) est configuré pour recevoir et traiter des données des capteurs de vitesse (33) afin de calculer un débit de transport du matériau d'ouvrage (7).

4. Engin de chantier selon la revendication 2 ou 3, **caractérisé en ce que** le système de commande électronique (21) est configuré pour déterminer une quantité tampon du matériau d'ouvrage (7) de l'engin de chantier (1, 3) en se basant sur les données reçues en provenance des capteurs (23, 29, 33) et sur une quantité initialement fournie de matériau d'ouvrage (7) et pour calculer ainsi à l'avance la disponibilité temporelle du matériau d'ouvrage (7).

5. Engin de chantier selon l'une quelconque des revendications précédentes, **caractérisé en ce que** le système de commande électronique (21) présente une interface (35) destinée à une transmission de données sans fil afin d'échanger des données avec des systèmes de commande électroniques (21) d'autres engins de chantier (1, 3) et/ou avec d'autres systèmes de traitement de données (36).

6. Engin de chantier selon l'une quelconque des revendications précédentes, en particulier finisseur routier (3), **caractérisé en ce qu'il** présente une table de réglage (13) avec une détection de largeur de table (39) afin de déterminer une largeur (B) d'un revêtement routier (17) mis en place.

7. Engin de chantier selon l'une quelconque des revendications précédentes, en particulier finisseur routier (3), **caractérisé en ce qu'**il présente un capteur de trajectoire (41, 43) afin de déterminer une distance parcourue lors d'une opération d'ouvrage et déterminer ainsi une longueur (L) d'un revêtement routier (7) mis en place.

8. Engin de chantier selon l'une quelconque des revendications précédentes, en particulier finisseur routier (3), **caractérisé en ce qu'**il présente une table de réglage (13) avec une détection d'épaisseur de couche (45) afin de déterminer une épaisseur de couche (H) d'un revêtement routier (17) mis en place.

9. Engin de chantier selon l'une quelconque des revendications précédentes, **caractérisé en ce que** le système de commande électronique (21) est configuré pour calculer une masse volumique et donc un degré de compactage du matériau d'ouvrage (7) en se basant sur la masse déterminée du matériau d'ouvrage (7) traité et sur la largeur (B), la longueur (L) et l'épaisseur de couche (H) du revêtement routier (17) mis en place.

10. Engin de chantier selon l'une quelconque des revendications 1 à 5, réalisé sous la forme d'un véhicule d'approvisionnement (1), **caractérisé en ce que** le système de bande transporteuse (11) est un système à bande orientable (11) conçu pour adopter différentes positions de pivotement (P1, P2) afin de transférer du matériau d'ouvrage (7) vers différents engins de chantier (1, 3), en particulier vers des finisseurs routiers (3), se succédant dans la chaîne de production.

11. Engin de chantier selon la revendication 10, **caractérisé en ce que** le système à bande orientable (11) comprend un capteur d'angle (49) afin de détecter la position de pivotement (P1, P2) du système à bande orientable (11) et d'associer différents secteurs angulaires (W1, W2) à différents engins de chantier (1, 3), en particulier des finisseurs routiers (3), se succédant.

12. Engin de chantier selon la revendication 10 ou 11, **caractérisé en ce qu'il** présente une unité de communication sans fil à champ proche (51) afin d'identifier, par lecture d'un identificateur unique (53), l'engin de chantier (1, 3) suivant, en particulier le finisseur routier (3), vers lequel doit être transféré le matériau d'ouvrage (7).

13. Engin de chantier selon l'une quelconque des revendications 10 à 12, **caractérisé en ce que** le système de commande électronique (21) et/ou l'interface (35) est configuré(e) pour identifier, au sein d'un flux de données, un engin de chantier (1, 3) suivant, en particulier un finisseur routier (3), vers lequel est transféré le matériau d'ouvrage (7).
